# EUROPÄISCHE PATENTANMELDUNG

(11) **EP 2 088 487 A1**
(43) Veröffentlichungstag der Anmeldung: **12.08.2009**
(21) Anmeldenummer: 08001955.7
(22) Anmeldetag: 01.02.2008
(51) Int. Cl.: G05B 19/04

(54) **Antriebsvorrichtung**

(71) Anmelder: SIEMENS AKTIENGESELLSCHAFT, 80333 München (DE)
(72) Erfinder: Behr, Wolfram, 80997 München (DE); Knorr, Markus, 86157 Augsburg (DE); Krejtschi, Jürgen, Dr., 90478 Nürnberg (DE); Schäfers, Elmar, Dr., 90763 Fürth (DE); Wolter, Wolfgang, 85241 Herbertshausen (DE)

(57) **Zusammenfassung**

Eine erfindungsgemäße Antriebsvorrichtung (1) umfasst eine erste Asynchronmaschine (3), einen Umrichter (7), eine Synchronmaschine (15) zur Zuführung von mechanischer Leistung zu einem technischen Prozess (17), und eine Umschalteinrichtung (9). Die Umschalteinrichtung (9) ist erfindungsgemäß so ausgelegt, dass während des Betriebs der Antriebsvorrichtung (1) die Synchronmaschine (15) während eines ersten Betriebszustands direkt von der ersten Asynchronmaschine (3) und während eines zweiten Betriebszustands von der ersten Asynchronmaschine (3) mittels des Umrichters (7) mit Energie gespeist ist.

## Beschreibung

Die Erfindung betrifft eine Antriebsvorrichtung, insbesondere für eine große Servopresse.

Eine Vielzahl an bekannten Produktions- und Werkzeugmaschinenanwendungen erfordern während des Betriebs der entsprechenden Anwendung nicht immer eine dynamische Zufuhr an Leistung. So kann es durchaus vorkommen, dass während bestimmter Phasen der Produktion oder Anwendung eine weitgehend konstante hohe Leistung mit entsprechender weitgehend konstanter Antriebsdrehzahl gefordert ist, während in anderen Prozessphasen die eingangs erwähnte dynamische Leistungszufuhr bei variierender Drehzahl erforderlich ist. Letztgenannte Phasen weisen oftmals einen geringeren Leistungsbedarf auf als diejenigen mit konstanter Antriebsdrehzahl.

Bekannte Antriebsvorrichtungen, insbesondere Antriebsvorrichtungen für Servopressen, umfassen beispielsweise einen Synchronmotor auf, mittels welchem eine geforderte mechanische Leistung für den Verarbeitungsprozess zur Verfügung gestellt wird, wobei der Synchronmotor von einer Asynchronmaschine über einen Umrichter angetrieben wird. Derartige bekannte Vorrichtungen realisieren folglich während aller Verarbeitungsphasen einen mittels des Umrichters geregelten Betrieb, und der Umrichter stellt während jeder Betriebsphase die jeweils geforderte Leistung bereit.

Nachteilig dabei ist, dass der Umrichter auf den größten geforderten Leistungsbedarf der Antriebsvorrichtung abgestimmt und in der Lage sein muss, diese größte geforderte Leistung bereitzustellen.

Aufgabe der Erfindung ist es, eine aufwandsärmere und kostengünstigere Antriebsvorrichtung anzugeben.

Die Aufgabe wird erfindungsgemäß gelöst durch eine Antriebsvorrichtung umfassend mindestens eine erste Asynchronmaschine zur Verbindung der Antriebsvorrichtung mit einem Energieversorgungsnetz, mindestens einen Umrichter, eingangsseitig verbunden mit der ersten Asynchronmaschine,
eine Umschalteinrichtung umfassend mindestens einen ersten und einen zweiten Eingang, der erste Eingang direkt verbunden mit der ersten Asynchronmaschine und der zweite Eingang verbunden mit dem Umrichter, und mindestens eine Synchronmaschine verbunden mit der Umschalteinrichtung zur Zuführung von mechanischer Leistung zu einem technischen Prozess, wobei die Umschalteinrichtung derart eingerichtet ist, dass während des Betriebs der Antriebsvorrichtung die Synchronmaschine während eines ersten Betriebszustands direkt von der ersten Asynchronmaschine und während eines zweiten Betriebszustands von der ersten Asynchronmaschine mittels des Umrichters mit Energie gespeist ist.

Der erste Betriebszustand ist hierbei bevorzugt ein Betriebszustand mit im Wesentlichen konstanter Drehzahl und hohem Leistungsbedarf und der zweite Betriebszustand ist bevorzugt ein Betriebszustand mit variabler Drehzahl und einem im Vergleich zum ersten Betriebszustand geringerem Leistungsbedarf.

Die Erfindung geht davon aus, dass eine geregelte Leistungserbringung für den Synchronmotor insbesondere im ersten, quasi-statischem Betriebszustand mit hohem Leistungsbedarf nicht erforderlich ist, dass also der Umrichter nicht auf diesen hohen Leistungsbedarf ausgelegt werden muss. Statt dessen schlägt die vorliegende Erfindung vor, dass es während dieses ersten Betriebszustands mit weitgehend konstanter Antriebsdrehzahl und hoher Leistung eine direkte Kopplung der ersten Asynchronmaschine mit dem Synchronmotor geben kann und damit ein Bypass des Umrichters vorliegt, wohingegen während des zweiten Betriebszustands mit variierender Drehzahl und geringerer Leistung der Synchronmotor von der ersten Asynchronmaschine mittels des Umrichters leistungsmäßig geregelt gespeist wird. Da der Leistungsbedarf während des zweiten Betriebszustands geringer ist, muss folglich der Umrichter nur noch ausgelegt sein auf den geringeren Leistungsbedarf des zweiten Betriebszustands.

Je nach aktuell vorherrschendem Betriebszustand nimmt die Schaltungseinrichtung eine Verbindung des Synchronmotors entweder direkt mit der ersten Asynchronmaschine oder mit dem Umrichter vor. Die Schaltungseinrichtung kann dabei eine Identifikationslogik enthalten, um eine Betriebszustandsänderung automatisch zu erkennen und den Umschaltvorgang einzuleiten. Alternativ kann die Schaltungseinrichtung von einer externen Identifikationslogik angesteuert sein.

Eine Drehzahlregelung der Antriebsvorrichtung kann während des Betriebs im ersten Betriebszustand ausgelegt werden mit Hilfe einer Schlupfkennlinie der ersten Asynchronmaschine, wobei diese Drehzahlregelung bevorzugt eine P-Regelung ist, deren Verstärkungsfaktor durch die Steigung der Schlupfkennlinie der ersten Asynchronmaschine festgelegt ist.

Zum Zeitpunkt der Umschaltung in den ersten Betriebszustand ist die elektrische Drehfrequenz der ersten Asynchronmaschine höher als die des Synchronmotors. In diesem ersten Betriebszustand wirkt die erste Asynchronmaschine folglich als Generator und versorgt den Synchronmotor mit elektrischer Energie, welche der Synchronmotor dann in Form von mechanischer Energie dem technischen Prozess zuführt. Der sich durch die Wandlung von kinetischer in elektrische Energie einstellende Drehzahleinbruch der ersten Asynchronmaschine kann durch eine entsprechende Auslegung der in der Antriebsvorrichtung vorhandenen trägen Massen in einem vorgegebenen Toleranzband gehalten werden.

Die genannte Trägheit kann optimiert werden durch ein mit der ersten Asynchronmaschine verbundenes Schwungrad sowie durch eine zweite Asynchronmaschine, welche wiederum mit dem Schwungrad verbunden ist. Hierbei versorgt die zweite Asynchronmaschine, welche direkt mit dem Energieversorgungsnetz verbunden ist, zusammen mit dem Schwungrad die erste Asynchronmaschine kontinuierlich mit Energie.

Hierdurch können prozessbedingte Leistungsspitzen vom Netz ferngehalten werden, da die trägen Massen ausgleichend wirken.

Durch die an die Leistungsanforderungen des jeweiligen Betriebszustands angepasste Umschaltung des Synchronmotors entweder direkt auf die erste Asynchronmaschine oder indirekt auf diese mittels des Umrichters ist es nicht mehr erforderlich, den Umrichter gewissermaßen "überzudimensionieren", sondern der Umrichter muss nur noch an den geringeren Leistungsbedarf des zweiten Betriebszustands angepasst sein. Dadurch können die Anschaffungs- und Auslegungskosten für die Antriebsvorrichtung erheblich reduziert werden.

Die direkte Kopplung der ersten Asynchronmaschine mit dem Synchronmotor während des ersten Betriebszustands hat sich in Versuchen als einfaches und robustes, sowie kostengünstiges System erwiesen.

Im zweiten Betriebszustand, während welchem der Umrichter die leistungsmäßige Versorgung des Synchronmotors übernimmt, ist nun ein kleinerer Leistungs- bzw. Strombedarf vorhanden. Beispielsweise kann die Anwendung der Erfindung in Zusammenhang mit einer Servopresse zu einem Momenten- und Strombedarf während des zweiten Betriebszustands führen, welcher im Vergleich zum entsprechenden Bedarf im ersten Betriebszustand weniger als ein Drittel beträgt. Der Umrichter kann daher leistungsmäßig entsprechend kleiner dimensioniert werden.

Weitere bevorzugte Ausführungsformen sind in den abhängigen Patentansprüchen niedergelegt.

Im Folgenden wird ein Ausführungsbeispiel der Erfindung näher dargestellt. Es zeigt:
- FIG: eine erfindungsgemäße Antriebsvorrichtung mit einer Umschalteinrichtung.

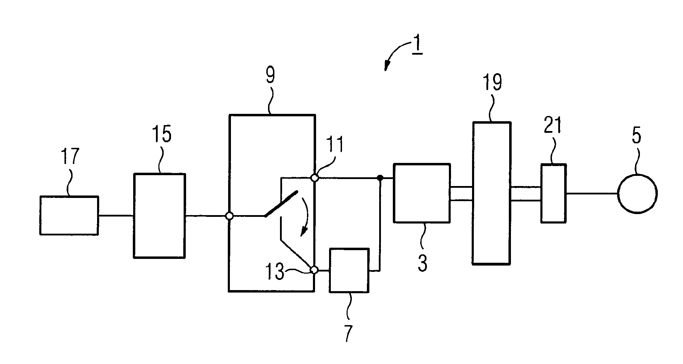

In der Figur ist eine erfindungsgemäße Antriebsvorrichtung 1 dargestellt, umfassend eine erste Asynchronmaschine 3 verbunden mit einem Schwungrad 19, welches wiederum mit einer zweiten Asynchronmaschine 21 verbunden ist, welche Energie aus einem Energieversorgungsnetz 5 bezieht.

Die Verbindung aus erster Asynchronmaschine 3, Schwungrad 19 und zweiter Asynchronmaschine 21 dient unter anderem dazu, als Energiepuffer zu dienen und Lastspitzen vom Energieversorgungsnetz 5 fernzuhalten sowie Leistung für einen Synchronmotor 15 zur Verfügung zu stellen.

Der Synchronmotor 15 erzeugt die für einen technischen Prozess 17, beispielsweise einen Pressvorgang, erforderliche mechanische Leistung, um z.B. eine Servopresse anzutreiben. Hierbei können auch mehrere Synchronmotoren vorgesehen sein.

Die erfindungsgemäße Antriebsvorrichtung 1 umfasst weiterhin als ein wesentliches Element eine Umschalteinrichtung 9 mit einem ersten Eingang 11 und einem zweiten Eingang 13.

Der erste Eingang 11 ist mit einem Leistungsausgang der ersten Asynchronmaschine 3 verbunden. Der zweite Eingang 13 ist mit einem Leistungsausgang eines Umrichters 7 verbunden, wobei der Leistungsausgang der ersten Synchronmaschine sowohl mit dem ersten Eingang, als auch mit einem Eingang des Umrichters 7 verbunden ist. Damit wirkt die Umschalteinrichtung 9 im Bedarfsfall als Bypass-Einrichtung für den Umrichter 7.

Die Umschalteinrichtung 9 umfasst eine Schaltfunktion in der Art eines Schalters, welcher den Synchronmotor 15 eingangsseitig je nach vorherrschendem Betriebszustand entweder direkt mit der ersten Asynchronmaschine 3 oder mit dem Leistungsausgang des Umrichters 7 verbindet.

Der erste Eingang 11 wird in einem ersten Betriebszustand zum Ausgang der Umschalteinrichtung 9 durchgeschaltet, nämlich dann, wenn zum Betrieb der erfindungsgemäßen Antriebsvorrichtung 1 eine hohe Leistung mit weitgehend konstanter Drehzahl erforderlich ist. Der Umrichter 7 ist in diesem Betriebszustand bevorzugt nicht an der Leistungsbereitstellung für den Synchronmotor 15 beteiligt. Alternativ kann der Umrichter 7 in diesem ersten Betriebszustand ergänzend Leistung bereitstellen.

In einem zweiten Betriebszustand mit geringerem Leistungsbedarf und variierender Drehzahl, im dynamischen Betrieb, wird der zweite Eingang 13 zum Ausgang der Umschalteinrichtung 9 durchgeschaltet, so dass in diesem zweiten Betriebszustand der Synchronmotor 15 mit dem Leistungsausgang des Umrichters 7 verbunden ist und eine geregelte Leistungsbereitstellung für den Synchronmotor stattfindet. In diesem zweiten Betriebszustand ist eine genaue und schnelle Regelung der benötigten Leistung erforderlich, da hier die Drehzahl stark schwanken kann und der Umrichter 7 dementsprechend schnell reagieren muss. In diesem zweiten Betriebszustand ist eine leistungsmäßige Versorgung des Synchronmotors 15 direkt durch die erste Asynchronmaschine 3 nicht ratsam oder sogar unmöglich, da die erste Asynchronmaschine 3 und ihr entsprechend vorgeschaltetes System zur Energiepufferung zu träge wäre.

Zusammengefasst lässt sich festhalten, dass mittels einer erfindungsgemäßen Antriebsvorrichtung 1 insbesondere der Umrichter 7 im Vergleich zu Vorrichtungen aus dem Stand der Technik kleiner dimensioniert werden kann, was zu geringeren Investitions- und Betriebskosten führt. Während des Betriebs im ersten Betriebszustand mit hohem Leistungsbedarf bei weitgehend konstanter Drehzahl sorgt das System aus erster Asynchronmaschine 3, Schwungrad 19 und zweiter Asynchronmaschine 21 dafür, dass Leistungsspitzen vom Energieversorgungsnetz 5 ferngehalten werden und eine große Leistung für den Synchronmotor 15 zur Verfügung gestellt wird bei weitgehend konstanter Drehzahl, so dass die Antriebsvorrichtung 1 insgesamt robust arbeitet. Im zweiten Betriebszustand mit variabler Drehzahl und geringerer Leistung bleibt "alles beim alten" und der Umrichter versorgt den Synchronmotor 15 mit variabler Leistung.

## Patentansprüche

1. Antriebsvorrichtung (1), umfassend:
mindestens eine erste Asynchronmaschine (3) zur Verbindung der Antriebsvorrichtung (1) mit einem Energieversorgungsnetz (5),
mindestens einen Umrichter (7), eingangsseitig verbunden mit der ersten Asynchronmaschine (3),
eine Umschalteinrichtung (9) umfassend mindestens einen ersten (11) und einen zweiten Eingang (13), der erste Eingang (11) direkt verbunden mit der ersten Asynchronmaschine (3) und der zweite Eingang (13) verbunden mit dem Umrichter (7), und
mindestens eine Synchronmaschine (15) verbunden mit der Umschalteinrichtung (9) zur Zuführung von mechanischer Leistung zu einem technischen Prozess (17), wobei die Umschalteinrichtung (9) derart eingerichtet ist, dass während des Betriebs der Antriebsvorrichtung (1) die Synchronmaschine (15) während eines ersten Betriebszustands direkt von der ersten Asynchronmaschine (3) und während eines zweiten Betriebszustands von der ersten Asynchronmaschine (3) mittels des Umrichters (7) mit Energie gespeist ist.

2. Antriebsvorrichtung (1) nach Anspruch 1,
**dadurch gekennzeichnet, dass** der erste Betriebszustand einen Betriebszustand mit im Wesentlichen konstanter Drehzahl und hohem Leistungsbedarf und der zweite Betriebszustand einen Betriebszustand mit variabler Drehzahl und einem im Vergleich zum ersten Betriebszustand geringerem Leistungsbedarf umfasst.

3. Antriebsvorrichtung (1) nach einem der Ansprüche 1 bis 2, **gekennzeichnet durch** ein mit der ersten Asynchronmaschine (3) verbundenes Schwungrad (19).

4. Antriebsvorrichtung (1) nach Anspruch 3,
**gekennzeichnet durch** eine zweite Asynchronmaschine (21) verbunden mit der ersten Asynchronmaschine (3) über das Schwungrad (19), wobei die erste Asynchronmaschine (3) mit dem Energieversorgungsnetz (5) verbunden ist über das Schwungrad (19) und die zweite Asynchronmaschine (21).

5. Antriebsvorrichtung (1) nach einem der Ansprüche 1 bis 4, wobei der Umrichter (7) leistungsmäßig ausgelegt ist auf den zweiten Betriebszustand.
